# EUROPEAN PATENT SPECIFICATION

(11) **EP 1 512 605 B1**
(45) Date of publication and mention of the grant of the patent: **09.06.2010**
(21) Application number: 04380177.8
(22) Date of filing: 02.09.2004
(51) Int. Cl.: B62B 3/02

(54) **Cart for carrying and displaying items**
Wagen zur Beförderung und Präsentation von Waren
Chariot pour transporter et présenter des articles

(30) Priority: 04.09.2003 ES 200302034 U
(43) Date of publication of application: 09.03.2005
(73) Proprietor: Campillo Gonzalez, Joaquin, 30002 Murcia (ES); Garcia Legaz, Juan, 30002 Murcia (ES)
(72) Inventor: Campillo Gonzalez, Joaquin, 30002 Murcia (ES); Garcia Legaz, Juan, 30002 Murcia (ES)
(74) Representative: Carvajal y Urquijo, Isabel

(56) References cited:
- DE-U1- 8 902 142
- US-A- 2 816 675
- US-A- 3 414 087

## Description

The present invention refers to a cart for carrying and displaying items, which is composed of a lower platform or frame with support members, an upper platform or frame and two extendable, plane and parallel upright structures linking the frames or platforms, preferably through their smaller sides, and have means for the assembly of shelves or trays on which the items to carry or display are placed.

More specifically, the cart of the invention is of the type in which plane structures linking the upper and lower platforms are each constituted of three telescopic columns, the lower section of which is hinged to the lower platform or frame, and the upper section of which is connected to the upper platform or frame, having an actuation mechanism by means of which movement of the upper section of the columns of the structures is achieved with regard to the lower section, for the purpose of situating the upper frame or platform in carrying and display positions.

Carts of the type set forth are already known in which the lifting device which lifts the upper section of the telescopic columns, and the upper platform along with it, is manually actuated, said means being constituted of arms functioning as a lever located on the sides of the cart, which must be actuated by two people at the same time and furthermore pose a risk for operators of the cart, since if they are released without being secured, they can abruptly turn downwards due to the effect of the weight supported by the cart, thus being able to hit the persons operating it.

A system similar to the previous one is also known, but which has an arrangement of the lever in the lengthwise direction of the cart, actuated by a bar located at the rear of the cart or display stand and aided by two pneumatic telescopic cylinders, but this system is not reliable for use due to its very construction, it is difficult to access when the cart or display stand is pushed against a wall or against another cart, and the use of pneumatic cylinders adds weight to the assembly.

Specifically, US 3 414 087 discloses a card according to the preamble of claim 1 for use in supplementing the available lift capacity of a powered unit comprising an only secondary platform having vertical movement, said platform disposed between two fixed vertical channel members.
The object of the present invention is to eliminate the drawbacks set forth by means of a cart as defined by the features of claim 1 in which the lifting mechanism is manually actuated, has a simple constitution and safe functioning.

According to the present invention, the upper section of the central column of the two plane upright structures is linked by means of a cable running through said columns and also through the lower platform, this cable being connected to a pickup mechanism which causes the lifting or lowering of the upper section, and of the upper platform or frame and of the shelves or trays assembled between the upper sections of the columns of the two structures along with it. This pickup mechanism for picking up the cable is provided with locking means by means of which the platform and trays or shelves can be locked at the chosen height.

Said pickup mechanism is assembled on the lower section of the central column of one of the plane structures and is constituted of a winding coil or core, which is actuated by means of a crank through a pair of step-up gears. The cable is connected to the core at one end and to the upper section of the central column of the other structure at the other end, in this latter column passing through a pulley suspended from the upper end of the lower section. In the section running through the inside of the column bearing the pickup mechanism, the cable is also provided with a stop on which the lower end of the upper section of said column rests.

The pickup mechanism for picking up the cable can be constituted in a manner different to that described, by means of another combination of mechanical members which obtain, as a result, the reduction of the force needed to actuate it and the winding or unwinding of the cable to cause the lifting or lowering of the upper frame or platform.

The lifting cable rests on corner pulleys in order to run through the columns and lower platform or frame.

The constitution of the cart of the invention, as well as the functioning of the lifting mechanism thereof, will be better understood with the following description, made in reference to the attached drawings, in which a non-limiting embodiment is shown.

In the drawings:
Figure 1 shows a perspective view of the cart assembled in the loading position.
Figure 2 shows a view similar to Figure 1, with the cart in the display position, with the structures supporting the upper platform being extended.
Figure 3 shows a perspective view of the cart in the folded position.
Figure 4 shows a perspective view of the components of the lifting system or mechanism.
Figure 5 schematically shows an elevational view of the lifting mechanism of Figure 4.
Figure 6 shows a detailed perspective view of the ratchet mechanism as an illustrative example of one of the possible actuation mechanisms.

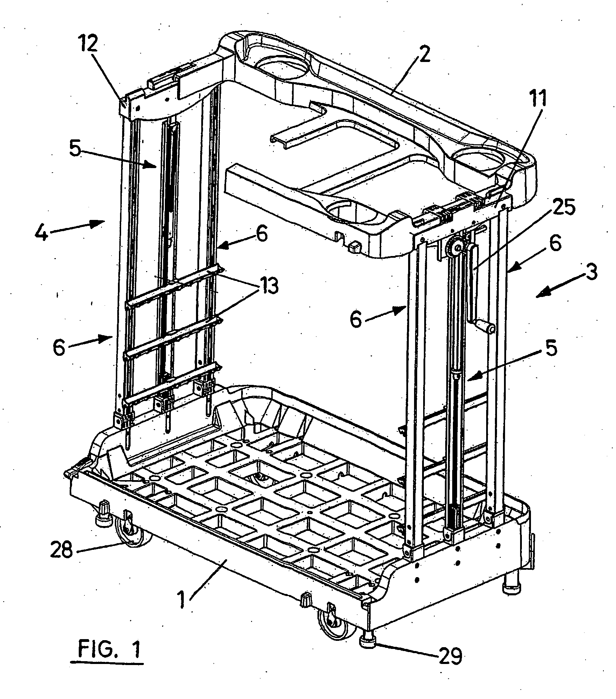

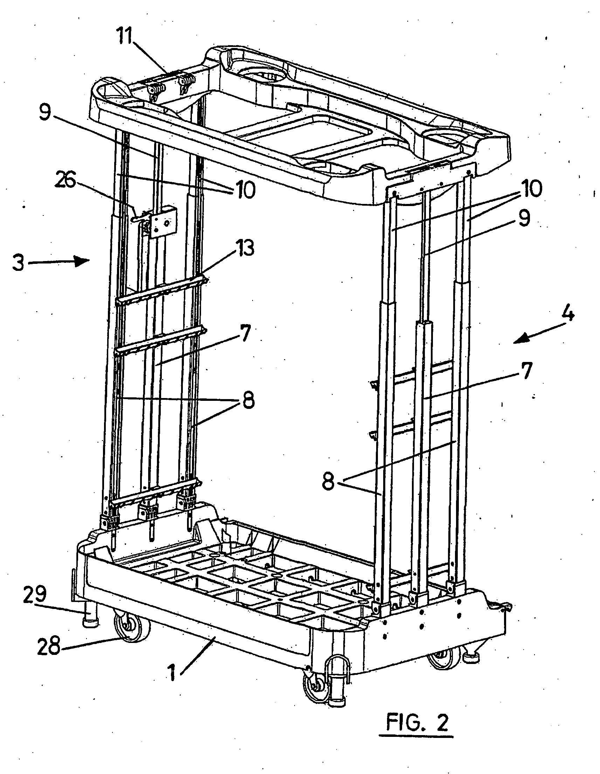

As shown in Figures 1 and 2, the cart of the invention comprises a lower platform or frame 1, an upper platform or frame 2 and two plane and parallel upright structures, reference numbers 3 and 4, linking the platforms 1 and 2. Each of these structures includes a central column 5 and two side columns 6, all the columns being composed of two telescopically coupled sections, a lower one with reference number 7 in the central columns and with number 8 in the side columns, and an upper one with reference number 9 in the central column and number 10 in the side columns. The lower section 7 and 8 of the three columns of the two structures is hinged at the lower end to the lower platform or frame 1. The upper section 9 and 10 of the plane structure 3 is hinged at its upper end to the upper tray 2 by means of an intermediate hinging piece 11. For its part, the upper section of the central columns 5 and side columns 6 of the structure 4 are fixed at their upper end to a piece 12 on which the upper frame 2 can be coupled and fixed, or else lifted and removed with regard thereto.

Both the lower section 7 and 8 of the columns of both structures and the upper section 9 and 10 thereof bear crossbars or supports 13 for shelves or trays on which the items to carry and display will be placed.

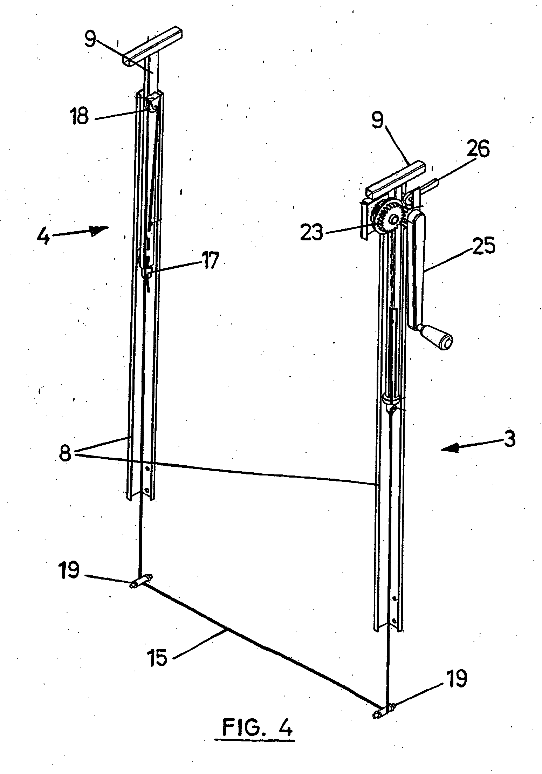

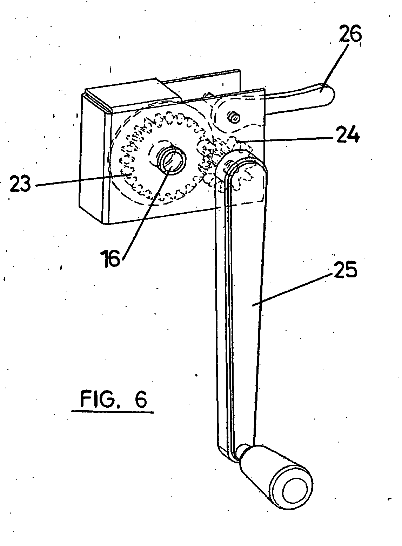

As can be best seen in Figures 4, 5 and 6, the upper section 9 of the two plane structures 3 and 4 are linked to one another by means of a cable 15, one end of which is fixed to the winding core 16, whereas at the other end, by means of a stop 17, it is anchored to the lower end of the upper section 9 of the structure 4, after passing through the pulley 18, suspended from the upper end of the lower section 8 of the same structure. The cable 15 runs through the central column of the two structures and also through or under the lower platform 1, being driven by corner pulleys 19. In the section running through column 8 of the structure 3, the cable 15 further incorporates a stop 20 fixed thereto with a centering device 21 resting against the lower end of the upper section 9 of the central column of the structure 3.

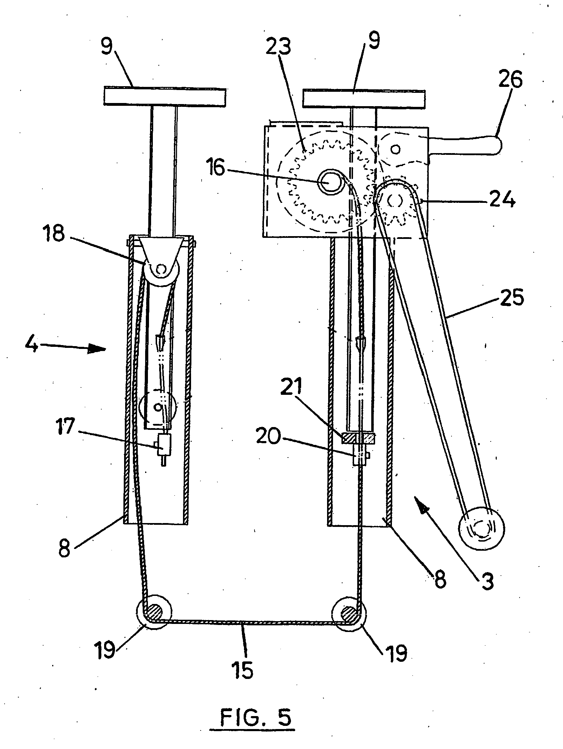

in the embodiment example shown in Figures 5 to 7, a pinion 23 with a diameter much larger than that of the winding core 16 is fixed to said core 16 for winding the cable 15, with which pinion a second pinion 24 meshes, to the shaft of which an external actuation crank 25 is fixed, thus having a step-up gear assembly, which can be locked by means of a ratchet 26.

With the constitution described, when the crank 25 is turned from the cart carrying position of Figure 1, this causes the upward movement of the upper section 9 of the central column of the two structures, thus lifting the upper platform or frame 2 and the solidly fixed crossbars or stops 13 of this upper section, until reaching the position of Figure 2, corresponding to the display position and which can be locked by means of the ratchet 26.

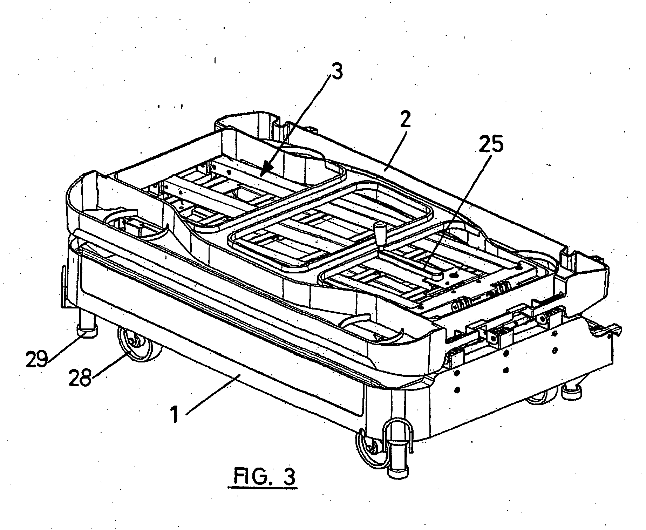

When the cart is to be completely folded, it will be enough to simply lift the upper frame 2 with regard to the piece 12 finishing off the upper portion of the plane structure 4, fold the plane structures 4 and 3 over the lower frame 1 and fold the upper frame 2, which is collapsed on the plane structure 3, outwards in reverse position, as seen in Figure 3.

The lower platform or frame 1, as is normal, is provided with wheels 28 and height-adjustable support legs 29.

As can be understood, the plane structures 3 and 4 could include a different number of columns and the pinion and ratchet mechanism by means of which acting on the winding core 16 for winding the cable is achieved, could have a different constitution, as long is a multiplication of the force applied on the crank 25 or actuation member is achieved.

## Claims

1. A cart for carrying and displaying items, comprising a lower platform or frame (1) with rolling members (28) and support members (29), an upper platform or frame (2) and two plane and parallel upright structures (3-4) linking the two frames or platforms, **characterized in that** said structures are constituted of telescopic columns (5-6), the lower section (7-8) of which is hinged to the lower platform or frame (1) and the upper section (9-10) of which is connected to the upper platform or frame (2), the upper section (9) of the central column (5) of the two plane upright structures (3-4) are linked by means of a cable (15) running through both central columns and through the lower platform (1) and is connected to a pickup mechanism (16) by means of which the lifting or lowering of said upper section, and that of the upper platform or frame (2) with it, is achieved, the pickup mechanism having locking means (26) for locking said platform at the chosen height.

2. A cart according to claim 1, **characterized in that** the pickup mechanism (16) is assembled on the lower section (7) of the central column (5) of one of the plane structures (3) and is constituted of a winding coil or core (16) which is actuated by means of a crank (25) through a pair of step-up gears (23-24), the cable being connected at one end to said core and at the other end is connected to the upper section (9) of the central column of the other structure (4), passing through a pulley (18) in this column suspended from the upper end of the lower section (7); in the section running through the inside of the column bearing the pickup mechanism, said cable furthermore having a stop (20) on which the lower end of the upper section (9) of said column rests.

## Patentansprüche

1. Wagen zum Tragen und Auslegen von Elementen, mit einer/einem unteren Plattform oder Rahmen (1) mit Rollelementen (28) und Tragelementen (29), mit einer/einem oberen Plattform oder Rahmen (2) und zwei flachen und parallel aufrechten Strukturen (3-4), welche die zwei Rahmen oder Plattformen verbinden,
**dadurch gekennzeichnet,**
**dass** die Strukturen als teleskopische Ständer (5-6) gebaut sind, deren unterer Abschnitt (7-8) an der unteren Plattform oder dem Rahmen (1) angelenkt ist, und deren oberer Abschnitt (9-10) mit der oberen Plattform oder dem Rahmen (2) verbunden ist, wobei die oberen Abschnitte (9) der zwei flachen aufrechten Strukturen (3-4) des zentralen Ständers (5) mittels eines Kabels (15) verbunden sind, das durch beide zentralen Ständer und durch die untere Plattform (1) läuft und mit einem Aufnehmmechanismus (16) verbunden ist, mittels welchem das Heben oder Senken des oberen Abschnitts und das der oberen Plattform oder des Rahmens (2) mit ihm verwirklicht wird, wobei der Aufnehmmechanismus Verriegelungsmittel (26) zum Verriegeln der Plattform in einer ausgewählten Höhe hat.

2. Wagen nach Anspruch 1,
**dadurch gekennzeichnet,**
**dass** der Aufnehmmechanismus (16) auf dem unteren Abschnitt (7) des zentralen Ständers (5) einer der flachen Strukturen (3) zusammengefügt ist und aus einer gewundenen Spule oder einem Kern (16) besteht, der mittels einer Kurbel (25) durch ein Paar Übersetzungsgetriebe (23-24) betätigt wird, wobei das Kabel an einem Ende mit dem Kern und an dem anderen Ende mit dem oberen Abschnitt (9) des zentralen Ständers der anderen Struktur (4) verbunden ist und durch eine Scheibe (18) in diesem Ständer läuft, die von dem oberen Ende des unteren Abschnitts (7) hängt; dass der Abschnitt, durch die Innenseite des Ständers, der den Aufnehmmechanismus trägt, läuft, wobei das Kabel ferner einen Anschlag (20) hat, auf dem das untere Ende des oberen Abschnitts (9) des Ständers ruht.

## Revendications

1. Chariot pour transporter et présenter des articles, comprenant une plate-forme ou un cadre inférieur (1) avec des éléments de roulement (28) et des éléments de support (29), une plate-forme ou un cadre supérieur (2) et deux structures verticales parallèles et planaires (3-4) liant les deux cadres ou plates-formes, **caractérisé en ce que** lesdites structures sont constituées de colonnes télescopiques (5-6), dont la partie inférieure (7-8) est fixée en charnière sur la plate-forme ou le cadre supérieur (1) et dont la partie supérieure (9-10) est connectée à la plate-forme ou cadre supérieur (2), les parties supérieures (9) des colonnes centrales (5) des deux structures verticales planaires (3-4) sont liées au moyen d'un câble (15) traversant les deux colonnes centrales et la plate-forme inférieure (1) et sont connectées à un mécanisme de prise (16) au moyen duquel est réalisé le levage ou l'abaissement de ladite partie supérieure, et celui de la plate-forme ou du cadre supérieur (2) avec celle-ci, le mécanisme de prise ayant un moyen de verrouillage (26) pour verrouiller ladite plate-forme à la hauteur choisie.

2. Chariot selon la revendication 1, **caractérisé en ce que** le mécanisme de prise (16) est assemblé sur la partie inférieure (7) de la colonne centrale (5) de l'une des structures planaires (3) et est constitué d'une bobine ou d'un noyau d'enroulement (16) qui est actionné au moyen d'une manivelle (25) à travers une paire d'engrenages multiplicateurs (23-24), le câble étant connecté à une extrémité au dit noyau et à l'autre extrémité à la partie supérieure (9) de la colonne centrale de l'autre structure (4), en traversant une poulie (18) dans cette colonne suspendue de l'extrémité supérieure de la partie inférieure (7) ; dans la partie traversant l'intérieur de la colonne portant le mécanisme de prise, ledit câble ayant en outre une butée (20) sur laquelle repose l'extrémité inférieure de la partie supérieure (9) de ladite colonne.
